# EUROPEAN PATENT APPLICATION

(11) **EP 2 278 537 A1**
(43) Date of publication of application: **26.01.2011**
(21) Application number: 10169297.8
(22) Date of filing: 12.07.2010
(51) Int. Cl.: G06Q 10/00, B65G 1/137

(54) **Automated product unit picking apparatus**

(30) Priority: 10.07.2009 GB 0912027
(71) Applicant: The Boots Company PLC, Nottingham, Nottinghamshire NG2 3AA (GB)
(72) Inventor: Brackner, Anthony, Weybridge, Surrey KT13 0NY (GB); Parisi, Gaetano, Weybridge, Surrey KT13 0NY (GB)
(74) Representative: Walsh, David Patrick

(57) **Abstract**

The invention relates to automated product unit picking apparatus and a controller system. The apparatus is adapted to automate batch data assignment to ejected units. A process and computer program product to perform the process are also described.

## Description

The present invention relates to the traceability of product units batch data, expiring date and price and, in particular, but not exclusively to a process for automatically assigning batch data to product units processed through an automatic product unit picking apparatus adapted to automate batch data assignment to ejected units and to a process therefor.

It is common practice to assign batch details such as lot no, and expiry date and price to manufactured products units.

Such products are often stored in warehouses until ready for despatch and transport to the customer. Under existing and new legislation it is necessary to monitor the despatch and transport of specific products together with their batch details. With a manual picking system, products are collected from the picking location and then transported.

The unique products details including batch details will be assigned to the goods at Goods In at the warehouse by reading the data printed on the box or using special devices able to read graphic code (data-matrix or bar-codes). The picking location is then also assigned by the warehouse monitoring system and, subsequently, the order bin filled from the picking location for transport to the particular customer. In this way, batch details from Goods In through to customer transportation can be monitored for a specific product and this allows complete batch control.

However, in an automated picking process, assigning the order bin with specific batch data needs to be automatic. Reconciling Goods In and picking location with batch data is still manual but a way must be found thereafter to reconcile the batch data with the order bins automatically filled by the automatic picking apparatus.

The product picking apparatus of the present invention is of the known "A-frame" type and generally has at least one product bay with sloped product channels which are arranged next to one another and, optionally, on top of one another and which are adapted to receive stacks of product units. Each channel generally has an ejector at its lower longitudinal end for detecting, holding and ejecting the lowermost product unit in the stack. However, in some apparatus, there is a mobile ejector which is mounted to pick and eject from one or more channels and is suitably located and manoeuvrable for this purpose. The alternative types of ejection devices for the picking apparatus are well known to those skilled in the art. The channels are adapted to be filled at their higher longitudinal ends with further product units either from the same batch as those of the existing stack or from a new batch.

In order to assign a batch number to the channel of the apparatus where the products are stacked a device able to read the code on either the product itself or its container is first used to scan the product and then scan a relevant code on the channel to assign the product details to the channel.

However, when in such a stack of products there are products with two or more different batch numbers the central computer will not know the point of switch over from one batch to the next

Some of the other suppliers of automation have proposed different solutions to this problem. One solution to the problem of assigning batch data to such products is to require the operator to count the number of units remaining in an old batch within the channel before stacking the new product batch and to enter this information when entering the new batch/channel information into the system. The system can then count down the old batch in the channel according to the units picked before assigning the new batch details to the subsequent product batch in the channel.

This solution is a simple one. However, it would still suffer several drawbacks. Firstly, it is strictly required to load the channels top down and for some sizes of channel, this is particularly difficult.

In addition, in some cases, current batch product units will be stacked in two or more adjacent channels and these can have different quantities of remaining product units making the task of counting the remaining current batch product units with respect to each new batch particularly complicated and more subject to human error.

Furthermore, the management of the exceptions necessary when a single channel already contains two or more current batches of product makes this system even more prone to operator error.

Another solution would be to install a special sensor in order to "see" a particular separator inserted between the stacks of different batch numbers but in the current solution proposed, this would demand adapting and replacing the existing ejectors which would be time consuming and expensive.

There are also available other solution involving the use of RFID marked separators and consequent readers or continual laser reading devices. All these solutions involve dramatic changes to the auto-picker apparatus and/or significant investment. According to the present invention there is provided an automatic product unit picking apparatus according to the claims and a process for enabling batch data assignment according to the claims.

Preferably, in accordance with the claims the modified empty product unit is shaped to be close fitting with a particular product storage channel size.

Preferably, there is a range of sizes of the modified empty product units to correspond with the range of product unit sizes and, therefore, the relevant product channel sizes.

Preferably, the channels are located in a side by side series.

Preferably, the channels are located one above the other.

Accordingly, topically, the apparatus has at least one product bay with sloped product channels which are arranged next to one another in the bay and, optionally, one above the other and which are adapted to receive stacks of product units.

Optionally the ejector module is a mobile device which is adapted to interact with a plurality of storage channels for independent serial ejection of the product units therefrom.

Typically, the ejector module channels are located at the lowermost end of the channel and are adapted to be filled at their higher longitudinal ends with further product units either from the same batch as those of the existing stack or from a new batch.

Typically, In accordance with the claims, there is a pre-defined or pre-determined number of ejection cycles, preferably, this number is two.

In accordance with the present invention it is preferred that the process of the claims uses apparatus according to the claims.

Advantageously, the invention uses the existing sensors without modification of the fixed or mobile ejector. By use of a fake product with, for instance, all or part of the bottom removed as a batch separator together with a modification in the software for the functionality of the empty channel sensor, it is possible to monitor batch changeover and assign new batch data to the new batch of product.

The invention will now be described by way of example only with reference to the accompanying drawings in which:-

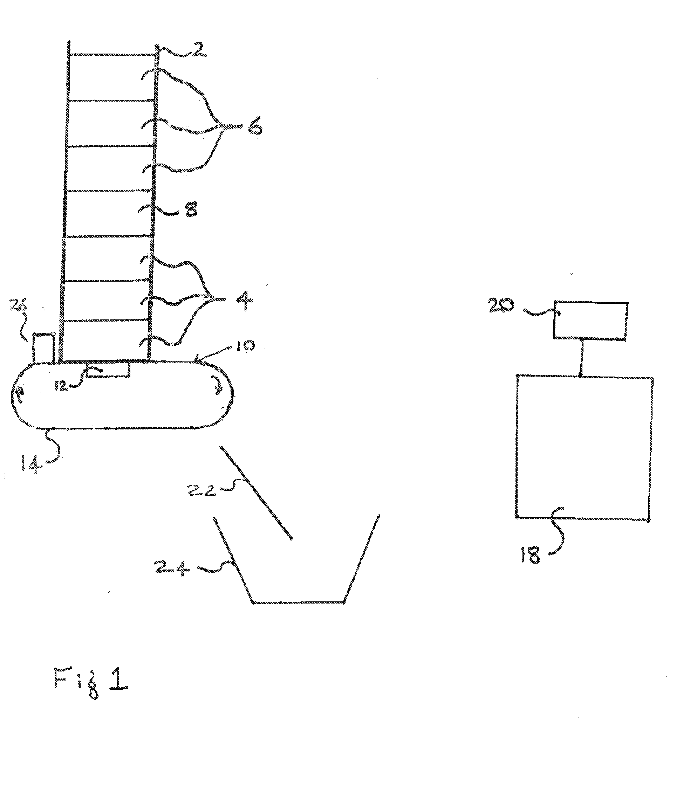

Figure 1 is a schematic representation of a product channel in accordance with the invention

Referring to figure 1, a channel 2, sloping vertically has a first lowermost plurality of stacked product units therein 4 and a second uppermost plurality of stacked product units 6 separated by a single blank product unit 8. An ejector 10 is positioned to support the stack of product units and eject the lowermost product unit in response to an eject signal from the controller unit 18. The ejector 10 includes a detector unit 12 which is adapted to detect the base of a product unit on the ejector belt 14. The detector 12 is operable to detect the presence or absence of a product unit on the conveyor and send the appropriate signal to the controller unit 18. After ejection by the belt 14 and the ejector lug 26 which extends perpendicularly from the conveyor surface as far as approximately three quarters the width of a product unit, the product unit is transported by the belt 14 and dropped of the end thereof to be guided by guide member 22 to a customer order bin 24. In a preferred embodiment, the ejector belt 14 drives products onto a central order conveyor belt (not shown) that is adapted to receive multiple products from a plurality of ejectors located on either side of the conveyor belt. The conveyor belt conveys the products before dropping the orders into the customer order bin. In the schematic drawing, the conveyor moves in a clockwise manner and is shaped as a simple elongate endless conveyor with a single ejector lug 26 but in practice there will be multiple lugs, typically three, equally spaced along a longer conveyor for serial ejection of the product units. The detector 12 is fixed with respect to the channel 2 and is therefore typically spaced from the underside of the conveyor to allow relative movement with respect thereto.

The apparatus controller unit 18 communicates with the host computer which has all the batch data, location data, customer order data etc. The operator replenishes the products in the channel and when the product changes batch the location details of the new batch are transferred, typically, using a hand held terminal such as an RF terminal transferring the batch location details in the host computer from the Storage Object to the specific automat channel by scanning each in turn. The automat channel has a barcode for this purpose so that the host computer can identify the batch's new location. At this point the "change in batch" flag is set for positive on this channel by the Host computer.

The customer order requirements are initially made available to the apparatus controller via the host computer which controller then transmits the appropriate signal to the ejector for the ejection of the appropriate number of product units to meet the order. In the case of a failure to detect a product unit, an empty channel signal is transmitted by the detector unit to the controller unit 18; this sets the empty channel digital flag as positive in the Host computer. If the "change in batch" flag is positive for this channel as well as the "empty channel" flag then a change of batch is indicated.

The Host computer then instructs the controller unit to continue ejection rather than indicate an empty channel exception and the ejector completes one further ejection cycle by ejecting one further product unit for the next or continuing customer order. However, if a second consecutive empty channel signal is received by the controller then the usual empty channel exception signal is generated and the operator will need to check the channel. However, if no such channel empty signal is received a product new batch is assumed to be present at the ejector unit and the controller recognises that the batch changeover has taken place and assigns the next new batch details in its memory to the customer order units being ejected from the picker. The batch change flag is then reset to negative to await a further new batch. In addition, the customer order bin where the product units are received would be ejected into the exception station so that the fake product unit can be removed and returned for future use in the product channels.

In this manner, 'the auto-picker of the invention does not require special adaptation of the ejectors to detect batch changeover but can use the existing ejector technology.

The invention relies on a blank product unit being located between successive product batches to trigger the batch data changeover process and the software protocol for the assignment of new batch data. The blank product unit is adapted by having its base side cut-out so that the detector returns an empty channel status to the controller when the blank product comes into contact with the ejector for ejection.

However, the blank product unit can be adapted in any other suitable way so long as it cannot be detected by the detector. In this way, by routine software adaption, batch control can be extended to the auto-picker without expensive ejector module modification or replacement and without complex manual countdowns of earlier batches for ejection.

The invention also extends to multiple channel batches by allocating relevant batch data to multiple channels and then assigning the batch data as each channel changes over being triggered by a blank product unit in each channel in each case. Advantageously, this need not take place simultaneously and each channel can therefore have independent batch changeover.

In addition, the controller can be adapted to store a series of sequential batch data so that batch data can be assigned to successive batches as each changeover is recognised according to the above protocol.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Automated product unit picking apparatus and a controller system adapted to automate batch data assignment to ejected product units for order bins comprising:-
(i) at least one product storage channel adapted to accommodate a stack of product units therein for serial ejection from the channel to an order bin according to automated order instructions received from a controller system;
(ii) an ejector module associated with the storage channel for serial ejection of the product units therefrom and having:-
(a) a product unit detector adapted to detect product absence at the ejector in the storage channel;
(b) means to receive and respond to eject instructions from the controller system to eject product units from the storage channel;
(iii) a controller system adapted:-
(a) to assign pending batch data to a storage channel of the apparatus in response to the relevant pending batch data and storage channel being identified and to preferably assign pending batch changeover status to the channel if more than one batch is present in the channel;
wherein the controller system is also adapted to respond to the detection of product absence at the ejector in the storage channel by assigning the said pending batch data to the subsequently ejected product units; and
(iv) optionally, at least one modified empty product unit adapted to cause the ejector module to detect product unit absence when in contact with the ejector module for ejection.

2. Automated product unit picking apparatus according to claim 1, wherein the modified empty pack has a portion of the product unit omitted corresponding to the ejector scanning area in use.

3. Automated product unit picking apparatus according to claim 1 or 2, wherein there are a plurality of product storage channels.

4. Automated product unit picking apparatus according to claim 1 or 2, wherein there is a plurality of modified empty product units.

5. Automated product unit picking apparatus according to any preceding claim, wherein each channel has an ejector module at its product ejection end for detecting, holding and ejecting the next product unit in the stack.

6. Automated product picking apparatus according to any preceding claim, wherein the controller system is adapted to transmit an instruction to the ejector module to eject the next product unit in response to product unit absence detection at the ejector module if there is pending batch data assigned to the channel.

7. Automated product picking apparatus according to any preceding claim, wherein the controller system is adapted to assign the next available batch data to the next product units ejected from the channel unless there is a further product unit absence detection at the ejector before a pre-defined number of ejection cycles of the new batch.

8. Automated product picking apparatus according to any preceding claim, wherein there is provided a transmitter for transmitting a product absence status to the controller system in response to product absence detection in the storage channel and a receiver in the control system to receive said product unit absence transmissions from the transmitter.

9. A process for enabling new batch data assignment by a host computer using automated product unit picking apparatus, the apparatus comprising an ejector module adapted to interact with a product unit at the ejection end of a product storage channel of the apparatus, the ejector module having product unit absence detection and product unit ejection capability; comprising the steps of:
(a) informing the host computer that the new batch location is being transferred to a specific first storage channel of the apparatus;
(b) optionally, setting pending batch changeover status as positive for the first channel;
(c) inserting a blank product unit, adapted to cause product unit absence detection by the ejector module detector, into the said first storage channel of the apparatus for ejection therefrom at the end of an existing earlier batch;
(d) inserting the new product batch units having the new batch data into the said first storage channel for serial ejection therefrom following the blank product unit;
(e) optionally, serially ejecting units of one or more existing earlier product unit batches in the said first storage channel using the ejector module;
(f) detecting product unit absence in response to the blank product unit interacting with the ejector module of the first channel for ejection;
(g) assigning the new batch data to the subsequent product units ejected from the first storage channel following step (f).

10. A process according to claim 9, wherein the process includes the step of continuing to effect one further product unit ejection cycle following detection of both product unit absence when the blank product unit interacts with the ejector module of the first channel for ejection and positive pending batch changeover status.

11. A process according to claim 9 or 10, wherein the process includes the step of assigning the new batch data to the new product units ejected from the first channel unless a second consecutive product absent signal is detected before a predetermined number of ejection cycles of the new batch.

12. A process according to claim 10 or 11, wherein if a second consecutive product absent ejection cycle is detected, the apparatus signals an empty channel exception status.

13. Use of at least one modified empty product unit adapted to cause the ejector module to detect product unit absence when in contact with the ejector module for ejection in apparatus according parts (i) to (iii) of claim 1.

14. An automatic product picking apparatus kit comprising automatic product picking apparatus according to claim 1 and at least one modified empty product unit adapted to cause the ejector module to detect product unit absence when in contact with the ejector module for ejection.

15. A computer program product carrying a computer program operable to perform the process of any one of claim 9 to 12.
